# EUROPÄISCHE PATENTSCHRIFT

(11) **EP 4 202 430 B1**
(45) Veröffentlichungstag und Bekanntmachung des Hinweises auf die Patenterteilung: **11.03.2026**
(21) Anmeldenummer: 22212892.8
(22) Anmeldetag: 12.12.2022
(51) Int. Cl.: G01N 27/44

(54) **MESSSYSTEM**
MEASUREMENT SYSTEM
SYSTÈME DE MESURE

(30) Priorität: 23.12.2021 DE 102021134602
(43) Veröffentlichungstag der Anmeldung: 28.06.2023
(73) Patentinhaber: Analytik Jena GmbH+Co. KG, 07745 Jena (DE)
(72) Erfinder: Henneberg, Heiko, 99338 Plaue (DE); Freundel, Marcel, 98693 Ilmenau (DE); Ehrling, Christiane, 98693 Ilmenau (DE); Kaufmann, Sophia, 07407 Rudolstadt OT Teichel (DE)
(74) Vertreter: Endress + Hauser Group Services (Deutschland) AG+Co. KG

(56) Entgegenhaltungen:
- DE-A1- 4 231 960
- JP-A- 2006 317 197
- US-A- 2 989 377
- US-A- 4 282 072
- US-A- 4 348 359
- US-A1- 2007 224 086
- US-A1- 2021 053 047

## Beschreibung

Die Erfindung betrifft ein temperierbares Messsystem. In Messsystemen, die beispielsweise zur Analyse von Stoffproben eingesetzt werden, werden in vielen Anwendungsfällen Messzellen mit einem Gefäß, das zur Aufnahme eines Elektrolyten bestimmt ist, sowie Elektroden verwendet, die mindestens abschnittsweise in das Gefäß hineinragen, so dass sie im Messbetrieb in den Elektrolyten eintauchen. Die Elektroden eines solchen Messsystems können für potentiometrische oder amperometrische Messungen eingesetzt werden, z.B. um Analyseparameter direkt aus der potentiometrischen oder amperometrischen Messung zu bestimmen. Amperometrische oder potentiometrische Messungen können auch in Titrierverfahren eingesetzt werden, wo sie der Indikation, d.h. der Bestimmung eines Endpunkts einer Titration dienen. Ein Spezialfall ist hier die coulometrische Titration, bei der Ionen als Reaktanden der Titration (auch als Titriermittel bezeichnet) dienen. Auf einer Titration basierende Messsysteme, z. B. coulometrische Messsysteme, werden beispielsweise in Elementaranalysesystemen genutzt, um den Schwefel- oder Chlorgehalt einer Probe zu ermitteln. Ein solches Elementaranalysesystem, das dazu eingerichtet ist, den Chlorgehalt einer Probe coulometrisch zu bestimmen, ist beispielsweise in EP 1837652 A2 beschrieben.

US 4,348,359 A offenbart eine Vorrichtung zur Bestimmung verschiedener Arten von Spurenstickstoff mit einem Messsystem, das einen Reaktionsabschnitt mit einem Katalysator zur Reduktion, einen Abschnitt zur Entfernung saurer Gase mit einer festen alkalischen Substanz, Heizabschnitte zum Erhitzen des Reaktionsabschnitts und des Abschnitts zur Entfernung saurer Gase, einen Abschnitt zur coulometrischen Titration und mindestens ein Destillationssystem umfasst.

Amperometrische und/oder potentiometrische Messungen, z.B. in coulometrischen Messverfahren, werden durch Temperaturänderungen stark beeinflusst, deshalb ist eine Thermostatierung der Messzelle, insbesondere des enthaltenen Elektrolyten und der Elektroden, wünschenswert, um eine ausreichende Messgenauigkeit zu erreichen und Drift der Messwerte infolge von Temperaturänderungen der Umgebung zu vermeiden. Üblich ist die Beheizung oder die Kühlung des den Elektrolyten enthaltenden Gefäßes coulometrischer Messzellen durch Aktoren, die in Kontakt zur Gefäßwandung oder zu einer Umhüllung der Messzelle stehen. So ist beispielsweise in der Gebrauchsmusterschrift G 91 15 947.4 eine Vorrichtung zur selektiven coulometrischen Bestimmung flüchtiger Verbindungen mittels isothermer Destillation und Absorption bei gleicher Temperatur beschrieben, die eine Elektrolysekammer mit Rührer, Generatorelektrode, Gegenelektrode, Reagenszuführung sowie Durchflussdetektor, und eine durch einen Überführungskanal mit ihr verbundene Destillationskammer mit Gas- und Proben- bzw. Reagenszuführung aufweist, wobei beide Kammern von einem temperierbaren Mantel umgeben sind.

In anderen aus dem Stand der Technik bekannten coulometrischen Messsystemen kann der in dem Gefäß der Messzelle aufgenommene Elektrolyt zum Beispiel über die Gefäßwandung oder einen umgebenden Messzellenkörper gekühlt werden, um Verdunstungseffekte zu mindern. Auch eine Beheizung des Elektrolyten über die Gefäßwandung oder einen umgebenden Messzellenkörper ist möglich. Diese Kühlung oder Beheizung der Gefäßwandung mittels unmittelbar auf diese einwirkende Aktoren bringt den Nachteil mit sich, dass thermische Übergangswiderstände zu Totzeiten bei der Temperaturregelung führen.

Hinzu kommt, dass die Elektroden der Messzelle sich mit einem häufig nicht vernachlässigbaren Teil ihrer Gesamtlänge aus dem den Elektrolyten enthaltenden Gefäß heraus in die Umgebung erstrecken.

Die Temperaturregelung solcher Messzellen ist mit den herkömmlichen Mitteln daher problematisch, da Änderungen der Umgebungstemperatur die Regelung beeinflussen und für eine unerwünschte Drift der Messwerte sorgen.

Der Erfindung liegt die Aufgabe zugrunde, ein gattungsgemäßes Messsystem mit verbesserten Mitteln zur Temperierung der Messzelle anzugeben.

Diese Aufgabe wird erfindungsgemäß gelöst durch das in Anspruch 1 angegebene Messsystem. Vorteilhafte Ausgestaltungen sind in den abhängigen Ansprüchen angegeben.

Das erfindungsgemäße Messsystem, umfasst:
- ein Gehäuse;
- eine in dem Gehäuse gebildete erste Kammer;
- eine in der ersten Kammer angeordnete Messzelle, die ein zur Aufnahme eines Elektrolyten ausgebildetes Gefäß und mindestens eine Elektrode für potentiometrische und/oder amperometrische Messungen aufweist, wobei die mindestens eine Elektrode einen ersten Abschnitt, der innerhalb des Gefäßes angeordnet ist, und einen zweiten Abschnitt, der sich aus dem Gefäß heraus in die erste Kammer erstreckt, aufweist; und
- eine Temperiervorrichtung, die dazu ausgestaltet ist, einen durch die erste Kammer verlaufenden, die Messzelle, insbesondere das Gefäß und den sich durch den Gefäßdeckel in die erste Kammer erstreckenden Abschnitt der mindestens einen Elektrode, umspülenden, temperierten Gasstrom zu erzeugen.

Indem das Gefäß mit der mindestens einen Elektrode vom temperierten Gasstrom umströmt wird, ist sichergestellt, dass der temperierte Gasstrom im Wesentlichen auf alle Komponenten der Messzelle einwirkt, und dadurch innerhalb kurzer Zeit eine homogene Temperaturverteilung in der Messzelle erreicht wird. Es zeigt sich, dass bei Temperierung mittels eines die Messzelle umströmenden Gasstroms nach Erreichen einer Zieltemperatur eine verbesserte Temperaturhomogenität gegenüber den einleitend beschriebenen Systemen aus dem Stand der Technik, bei denen die Temperierung der Messzelle mittels Aktoren erfolgt, die unmittelbar auf Kontaktflächen des Messzellengehäuses einwirken, erreicht wird. Äußere thermische Einflüsse werden an der Systemgrenze abgefangen und dringen dadurch nicht zur Messzelle vor. Dies erleichtert auch die Steuerung und/oder Regelung der Temperatur der Messzelle mit dem im Betrieb darin enthaltenen Elektrolyten und den Elektroden und verringert Messfehler oder Messwert-Drift infolge von Temperaturänderungen der Umgebung.

Die mindestens eine Elektrode der Messzelle kann eine Elektrode einer potentiometrischen Messkette oder eine Elektrode eines Elektrodensystems für amperometrische Messungen sein. Als Elektrode der potentiometrischen Messkette kann die Elektrode beispielsweise eine Referenz- oder eine Sensorelektrode sein.

In einer möglichen Ausgestaltung kann das Messsystem zur direkten potentiometrischen oder amperometrischen Messung einer Analysemessgröße dienen. In einer weiteren Ausgestaltung kann das Messsystem zur Bestimmung einer Analysemessgröße basierend auf einer Titration ausgestaltet sein, wobei der Endpunkt der Titration mittels einer potentiometrischen oder amperometrischen Messung ermittelt wird.

Beispielsweise kann das Messystem als coulometrisches Messsystem, beispielsweise zur coulometrischen Titration eines Analyten in dem Elektrolyten, ausgestaltet sein und eine mindestens abschnittsweise in dem Gefäß angeordnete Generatoranode und eine mindestens abschnittsweise in dem Gefäß angeordnete Generatorkathode zur Erzeugung des Titriermittels umfassen.

In einer alternativen Ausgestaltung kann das Messsystem zur Titration eines Analyten in dem Elektrolyten durch Zugabe eines flüssigen oder gasförmigen Titriermittels in die Messzelle ausgestaltet sein. In diesem Fall kann die Messzelle eine Zuleitung für ein Titriermittel aufweisen, die in das Gefäß mündet.

Das Gefäß kann in einer möglichen Ausgestaltung einen das Gefäß verschließenden, insbesondere abnehmbaren, Gefäßdeckel aufweisen. Die mindestens eine Elektrode der Messzelle kann sich durch den Gefäßdeckel hindurch aus dem Gefäß in die erste Kammer erstrecken.

Die Temperiervorrichtung weist zur Temperierung des Gasstroms einen außerhalb der ersten Kammer angeordneten ersten Wärmetauscher auf, der dazu ausgestaltet ist, von dem Gasstrom durchströmt zu werden, derart, dass der Gasstrom in einem durch die erste Kammer und den ersten Wärmetauscher verlaufenden Kreislauf geführt wird. Beispielsweise kann der Gasstrom über einen Gaseinlass in die erste Kammer gelangen, in der ersten Kammer die Messzelle umspülen und über einen Gasauslass aus der ersten Kammer heraus zurück in den ersten Wärmetauscher geführt werden. Alternativ kann der Gasstrom in umgekehrter Richtung verlaufen.

Der Kreislauf des temperierten Gasstroms ist in einer möglichen Ausgestaltung nicht hermetisch abgeschlossen, wobei das in dem Kreislauf strömende Gas Luft aus der ersten Kammer bzw. Umgebungsluft ist. Alternativ kann der temperierte Gasstrom aber auch aus einem Inertgas gebildet sein, z.B. Stickstoff, Argon oder Helium. In diesem Fall kann der Kreislauf gegenüber der Umgebung des Gehäuses des Messsystems abgedichtet sein, so dass keine Umgebungsluft in den temperierten Gasstrom gelangt bzw. dass das Gas des temperierten Gasstroms nicht in die Umgebung gelangt.

Die Temperiervorrichtung kann einen Strömungskanal mit einem ersten Ende und einem zweiten Ende aufweisen, wobei sich das erste Ende durch eine die erste Kammer begrenzende Wand in einen ersten Bereich der ersten Kammer öffnet, und wobei sich das zweite Ende durch die die erste Kammer begrenzende Wand in einen von dem ersten Bereich beabstandeten zweiten Bereich der ersten Kammer öffnet, und wobei die Temperiervorrichtung weiter mindestens einen in dem Strömungskanal angeordneten Lüfter aufweist, der dazu eingerichtet ist, Gas durch den Strömungskanal zu transportieren, wobei der erste Wärmetauscher so in dem Strömungskanal angeordnet ist, dass durch den Strömungskanal mittels des Lüfters transportiertes Gas den ersten Wärmetauscher durchströmt.

Der erste Bereich kann ein oberer Bereich der ersten Kammer sein, der zweite Bereich kann ein unterhalb des oberen Bereiches angeordneter zweiter Bereich der ersten Kammer sein. Der erste und der zweite Bereich können aber auch in einer alternativen Ausgestaltung auf gleicher Höhe voneinander horizontal beabstandet angeordnet sein.

Die Temperiervorrichtung kann eine Kühlvorrichtung zur Abführung von Wärme vom ersten Wärmetauscher und/oder eine Heizvorrichtung zur Zuführung von Wärme zum ersten Wärmetauscher aufweisen.

In einer vorteilhaften Ausgestaltung des Messystems kann die Kühlvorrichtung und/oder die Heizvorrichtung mindestens ein Peltier-Element umfassen. Alternativ kann die Kühlvorrichtung eine Wärmepumpe, z.B. als Kompressor-, Verdichter- oder Kondensator System, oder ein Verdunstungskältesystem umfassen.

Die Temperiervorrichtung kann einen zweiten Wärmetauscher aufweisen, der in thermischem Kontakt mit der Kühlvorrichtung und/oder der Heizvorrichtung steht. Weist die Kühlvorrichtung oder die Heizvorrichtung ein Peltier-Element auf, kann der zweite Wärmetauscher mit dem Peltier-Element in thermischem Kontakt stehen. Im Fall, dass die Temperiervorrichtung als Kühlvorrichtung ausgestaltet ist, kann die Warmseite des Peltier-Elements in thermischem Kontakt mit dem zweiten Wärmetauscher stehen, der dazu eingerichtet ist, Wärme vom Peltier-Element abzuführen, um die Effizienz der Kühlwirkung des ersten Wärmetauschers auf den durch den ersten Wärmetauscher strömenden Gasstrom zu erhöhen.

Die Temperiervorrichtung kann Mittel zur Erzeugung eines Fluidstroms aufweisen, der in thermischem Kontakt mit mindestens einer Kontaktfläche des zweiten Wärmetauschers steht. Der Fluidstrom kann ein Gas- oder Flüssigkeitsstrom sein. Die Mittel zur Erzeugung des Fluidstroms können z.B. einen Lüfter oder eine Pumpe umfassen.

In einer vorteilhaften Ausgestaltung ist der zweite Wärmetauscher innerhalb des Gehäuses in einer von der ersten Kammer getrennten zweiten Kammer angeordnet. Die genannten Mittel zur Erzeugung eines Fluidstroms, z.B. der Lüfter oder die Pumpe, können dazu ausgestaltet sein, Luft aus der Umgebung von außerhalb des Gehäuses in die zweite Kammer zum zweiten Wärmetauscher zu transportieren und wieder aus der zweiten Kammer auszuleiten. Diese Ausgestaltung ist insbesondere vorteilhaft, wenn die Temperiervorrichtung zum Kühlen des die Messzelle umspülenden Gasstroms dient. In diesem Fall weist die Temperiervorrichtung eine Kühlvorrichtung auf, von der mittels des zweiten Wärmetauschers und des den zweiten Wärmetauscher durchströmenden Fluidstroms Wärme abgeführt wird. Eine besonders effiziente Abführung der Wärme ist in ökonomischer Weise realisierbar, indem die Mittel zur Erzeugung des Fluidstroms kühle Luft aus der Umgebung der zweiten Kammer bzw. aus der Umgebung des Gehäuses ansaugen.

Das Messsystem kann eine Steuerelektronik aufweisen, die dazu eingerichtet ist, die Temperiervorrichtung zu steuern, um den Gasstrom zu temperieren. Die Steuerelektronik kann Teil einer Gerätesteuerung des Messsystems und/oder einer elektronischen Recheneinheit sein, die mit Elektroden und/oder Sensoren des Messsystems verbunden ist, um das Messsystem zu steuern, um Messwerte zu erfassen und um diese zu verarbeiten.

In einer vorteilhaften Ausgestaltung kann das Messsystem mindestens einen in dem temperierten Gasstrom angeordneten ersten Temperatursensor aufweisen, der mit der Steuerelektronik verbunden ist, um Messsignale an die Steuerelektronik auszugeben. Die Steuerelektronik kann dazu eingerichtet sein, anhand der Messsignale des mindestens einen ersten Temperatursensors eine Temperatur des Gasstroms einzustellen und/oder zu regeln.

Soweit das Messystem wie erwähnt eine Steuerelektronik aufweist, die dazu eingerichtet ist, die Temperiervorrichtung zu steuern um den Gasstrom zu temperieren, und mindestens einen im temperierten Gasstrom angeordneten ersten Temperatursensor aufweist, der mit der Steuerelektronik verbunden ist, um Messsignale an die Steuerelektronik auszugeben, kann das Messsystem vorteilhaft mindestens einen zweiten Temperatursensor aufweisen, der im Betrieb der Vorrichtung in dem Fluidstrom angeordnet ist, der in thermischem Kontakt mit dem zweiten Wärmetauscher steht. Der zweite Temperatursensor kann ebenfalls mit der Steuerelektronik verbunden sein, um Messsignale an die Steuerelektronik auszugeben. Diese kann dazu eingerichtet sein,
anhand der Messsignale des mindestens einen ersten und des mindestens einen zweiten Temperatursensors eine Temperatur des Gasstroms einzustellen und/oder zu regeln.

Durch einen oder mehrere Temperatursensoren, die sowohl im Gaskreislauf, der die erste Kammer durchsetzt, und entlang dessen im Betrieb der temperierte Gasstrom strömt, als auch im Fluidströmungsweg, entlang dessen im Betrieb der Fluidstrom in der zweiten Kammer verläuft, angeordnet sein können, kann die Steuerelektronik die Istzustände überwachen und über Regelkreise die Stellwerte für die Leistungsregelung der Temperiervorrichtung, z.B. der Kühlvorrichtung bzw. des Peltier-Elements und/oder für die Steuerung der Drehzahlen der Lüfter oder Pumpen in dem Gas- bzw. Fluidstrom vorgeben und damit die Temperaturregelung durch Vergleiche mit gesetzten Sollwerten realisieren.

In einer vorteilhaften Ausgestaltung weist das Messsystem eine aus einem oder mehreren Teilen bestehende, Abdeckung auf, die derart lösbar an einer Wand der ersten Kammer befestigt ist, dass sie die Messzelle, insbesondere das Gefäß und den sich aus dem Gefäß heraus in die erste Kammer erstreckenden Abschnitt der mindestens einen Elektrode, umgibt. Die Abdeckung ist so ausgestaltet, dass der temperierte Gasstrom den von der Abdeckung umschlossenen Raum innerhalb der ersten Kammer durchströmt. Die Abdeckung kann dabei den Gasstrom lenken, so dass er die Messzelle umströmt und so die Einstellung oder Regelung einer stabilen Temperatur der Messzelle bzw. des darin enthaltenen Elektrolyten und der Elektroden mit geringer Totzeit ermöglicht. In einer möglichen Ausgestaltung können das erste und das zweite Ende des bereits erwähnten Strömungskanals in den von der Abdeckung umschlossenen Raum münden. Die Abdeckung muss dabei den von ihr umschlossenen Raum nicht hermetisch abschließen.

Die Abdeckung kann eine, vorzugsweise oberhalb der Messzelle angeordnete, Öffnung aufweisen, durch die bei montierter Abdeckung ein Flüssigkeitsstandard in das Gefäß der Messzelle dosiert werden kann. Das Messsystem kann eine Dosierleitung umfassen, die durch die Öffnung zu einem, insbesondere in dem bereits erwähnten Gefäßdeckel der Messzelle angeordneten, Flüssigkeitseinlass der Messzelle geführt ist.

Im Messbetrieb, z.B bei der coulometrischen Bestimmung von Schwefel, Chlor oder mehreren Halogenen (z.B. AOX) als Analyten in einem Messgasstrom, kann die Messzelle von dem Messgasstrom, z.B. einem den oder die Analyten enthaltenden Trägergasstrom, durchströmt werden. Die Messzelle kann hierzu einen in das Gefäß der Messzelle mündenden Gaseingang und einen, insbesondere im Gefäß der Messzelle angeordneten, Gasausgang aufweisen, wobei der Gasausgang mit einer aus der ersten Kammer herausgeführten, Gasableitung verbunden ist. Der Messgasstrom stellt in herkömmlichen coulometrischen Messsystemen eine weitere Störgröße dar, die die Temperatureinstellung in der Messzelle beeinflussen kann. Durch die Temperierung der Messzelle mittels des temperierten Gasstroms wird diese Störgröße kompensiert.

Beispielsweise bei Verwendung des Messsystems in Form eines coulometrischen Messsystems in einer Analysevorrichtung zur quantitativen Bestimmung von Halogenen oder AOX in einer Probe wird, wie eingangs beschrieben, die Probe verbrannt und dabei gebildeter Halogenwasserstoff HX (z.B. HCl, HBr, HI) in einem Mess- oder Trägergasstrom in die Messzelle transportiert und in einem Elektrolyten, der Essigsäure enthält, gelöst. Die quantitative Bestimmung des oder der Halogene erfolgt mittels Titration, z.B. coulometrischer Titration (Argentometrie), im Elektrolyten. Um zu vermeiden, dass Essigsäure-Dämpfe oder andere Substanzen aus dem Elektrolyten aus der Messzelle über den Gasausgang in die erste Kammer oder in die Umgebung gelangen, kann die Gasableitung mit einer Absaugeinrichtung, insbesondere einer Pumpe, verbunden sein.

In einer möglichen Ausgestaltung kann die Pumpe das Messgas bzw. das Trägergas durch die Messzelle transportieren.

In einer weiteren Ausgestaltung kann der Gasausgang der Messzelle, insbesondere über ein den Gasausgang mit der Gasableitung verbindendes T-Stück, zur ersten Kammer offen sein. Alternativ kann die Öffnung, z.B. bei einer Ausgestaltung ohne die zuvor erwähnte Abdeckung, direkt in die erste Kammer münden. Diese Ausgestaltung ist vorteilhaft, wenn das Mess- oder Trägergas durch Überdruck oder mittels einer von der Pumpe der Absaugeinrichtung verschiedenen zweiten Pumpe durch die Gaszuleitung in das Gefäß der Messzelle transportiert wird.

Wenn, wie weiter oben erwähnt, das den temperierten Gasstrom bildende Trägergas Luft ist, und der Kreislauf, insbesondere die Abdeckung und auch die erste Kammer, in dem der Gasstrom geführt ist, nicht hermetisch gegenüber der Umgebung abgeschlossen ist, saugt die Pumpe im Betrieb des Messsystems nicht nur das die Messzelle durchströmende Messgas einschließlich etwaiger Reaktionsprodukte aus der Messzelle ab, sondern über die erwähnte Öffnung, z.B. das T-Stück, auch Gas aus dem temperierten Gasstrom. Vorteilhafterweise handelt es sich dabei um eine nur geringe Menge. Auf diese Weise ist einerseits sichergestellt, dass Substanzen aus dem aus der Messzelle ausgeleiteten Gasstrom, wie die erwähnte Essigsäure, nicht in die erste Kammer und/oder in den von der Abdeckung umgebenen Raum der ersten Kammer gelangen. Ist das Gehäuse bzw. die erste Kammer nicht hermetisch abgeschlossen, kann Luft aus der Umgebung nachströmen, um die durch die Absaugeinrichtung aus dem temperierten Gasstrom entzogene Luft zu ersetzen.

Eine Steuerelektronik des Messystems, z.B. die bereits erwähnte Steuerelektronik, kann dazu eingerichtet sein, einen Gasfluss von Messgas, z.B. Trägergas mit dem oder den Analyten, durch den Gaseingang in die Messzelle einzustellen, und einen Gasfluss durch die Gasableitung einzustellen, derart, dass der Gasfluss durch die Gasableitung größer, vorteilhafterweise geringfügig größer, ist als der Fluss von Messgas durch den Gaseingang. Die Temperaturregelung der Steuerelektronik kann dazu eingerichtet sein, zur Steuerung oder Regelung der Temperatur des temperierten Gasstroms oder der Temperatur der Messzelle auch den Gasfluss durch die Gasableitung einzustellen, indem sie eine entsprechende Stellgröße an die Pumpe ausgibt.

Bei all diesen Ausgestaltungen kann das Messsystem weiter eine stromabwärts der Messzelle angeordnete Adsorber-Einheit aufweisen, über die die Messzelle mit dem Inneren der ersten Kammer, mit dem Inneren einer weiteren Kammer innerhalb des Gehäuses oder mit der Umgebung außerhalb des Gehäuses des Messsystems verbunden ist. Der aus der Messzelle ausgeleitete Gasstrom durchströmt im Messbetrieb die Adsorber-Einheit, die dazu eingerichtet ist, Substanzen aus dem Gasstrom, z.B. aus dem Elektrolyten entweichende Dämpfe wie die bereits erwähnte Essigsäure oder Reaktionsprodukte, zu adsorbieren. Sie kann beispielsweise Aktivkohle als Adsorbens enthalten. Das von den adsorbierten Substanzen befreite Gas kann dann in die Umgebung entlassen werden.

Zur Durchmischung des in dem Gefäß der Messzelle enthaltenen Elektrolyten kann das Messsystem einen Rührer, insbesondere einen Magnetrührer, aufweisen. Ein Antrieb des Rührers kann sich außerhalb des temperierten Raums, d.h. beispielsweise außerhalb der ersten Kammer oder, falls die erwähnte Abdeckung vorhanden ist, zumindest außerhalb der Abdeckung, befinden. Auf diese Weise wird der Einfluss der Verlustleistung des Antriebs auf die Temperatur der Messzelle bzw. des darin enthaltenen Elektrolyten, minimal.

Die Erfindung umfasst auch ein Elementaranalysesystem zur quantitativen Bestimmung eines Analyten aus einer, beispielsweise festen, flüssigen oder gasförmigen Probe, umfassend
einen Verbrennungsofen;
ein in dem Verbrennungsofen angeordnetes Verbrennungsrohr zur Aufnahme und Verbrennung der Probe;
mindestens eine sich in das Verbrennungsrohr öffnende Gasleitung; und
ein Messsystem nach einer der voranstehend beschriebenen Ausgestaltungen,
wobei die Gasleitung mit einem Gaseingang der Messzelle des Messystems fluidisch verbunden ist, um aus dem Verbrennungsrohr ausgeleitetes Messgas, beispielsweise ein ein bei der Verbrennung der Probe gebildetes Reaktionsprodukt des Analyten enthaltendes Trägergas, dem Messsystem zuzuführen.

Die Erfindung wird im Folgenden anhand der in den Figuren dargestellten Ausführungsbeispiele beschrieben. Dabei bezeichnen gleiche Bezugszeichen gleiche Komponenten der in den Figuren gezeigten Bauteile. Es zeigen:
- Fig. 1: ein Ausführungsbeispiel des erfindungsgemäßen Messystems; und
- Fig. 2: ein Elementaranalysesystem mit dem in Fig. 1 dargestellten Messsystem.

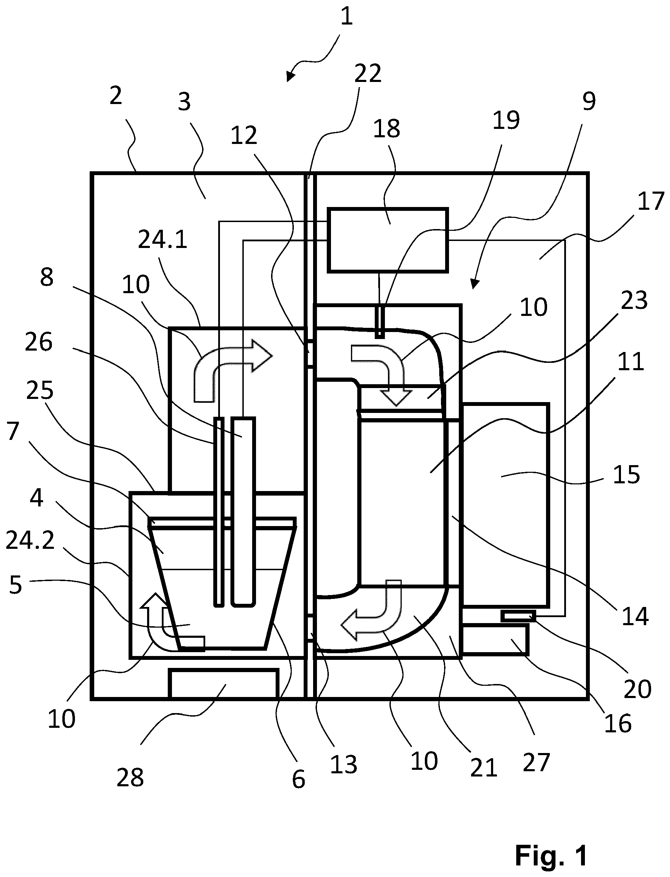

In Fig. 1 ist in einer schematischen Längsschnitt-Darstellung ein Ausführungsbeispiel eines Messsystems 1 dargestellt, das der quantitativen Bestimmung eines Analyten, z.B. eines Halogens in einer Probe, basierend auf dem Prinzip der coulometrischen Titration dient. Das Messsystem 1 weist ein Gehäuse 2 auf, das in mehrere Kammern unterteilt ist. In einer ersten Kammer 3 ist eine coulometrische Messzelle 4 mit einem Gefäß 6 und einem das Gefäß 6 verschließenden Deckel 7 angeordnet. Das Gefäß 6 ist zur Aufnahme eines Elektrolyten 5 bestimmt, in dem im Betrieb des Messsystems 1 eine coulometrische Titration erfolgt. In dem Deckel 7 sind mehrere Öffnungen angeordnet, die der Zu- und Ableitung von Fluiden oder zur Durchführung von Elektroden dienen. Im vorliegenden Beispiel sind zwei Elektroden 8, 26 dargestellt. Die Elektrode 8 ist im vorliegenden Ausführungsbeispiel eine für die potentiometrische Indikation der coulometrischen Titration verwendbare potentiometrische Kombielektrode aus Sensor- und Referenzelektrode. Alternativ ist es auch möglich, voneinander getrennte Referenz- und Sensorelektroden zu verwenden. Die Elektrode 26 ist eine Generatorkathode, z.B. eine Platinelektrode. Die Generator-Anode kann in Form einer Silberscheibe am Grunde des Gefäßes 6 oder ebenfalls als im Deckel 7 sitzende Elektrode angeordnet sein (Generator-Anode hier nicht dargestellt). Möglich ist auch eine Indikation nach einem amperometrischen Messverfahren. Die möglichen coulometrischen Messverfahren für die Bestimmung von Halogenen und/oder Schwefel sind dem Fachmann bekannt und werden hier nicht ausführlich besprochen. Zur Erfassung von Messwerten und zur Steuerung der Titration sind die Elektroden 8, 26 mit einer Steuerelektronik 18 verbunden, die in dem Gehäuse 2 des Messystems 1 angeordnet sein kann.

Die Elektroden 8, 26 ragen mit einem ersten Abschnitt in das Gefäß 6 hinein, derart, dass der erste Abschnitt in einen im Gefäß 6 enthaltenen Elektrolyten 5 eintaucht. Ein rückwärtiger zweiter Abschnitt der Elektroden 8, 26 erstreckt sich durch den Deckel 7 außerhalb des Gefäßes 6 in die erste Kammer 3 hinein. Die zweiten Abschnitte der Elektroden 8, 26 sind über elektrische Leitungen mit einer Messschaltung und/oder der Steuerelektronik 18 verbunden. Die Messzelle 4 und die zweiten Abschnitte der Elektroden 8, 26 sind von einer Abdeckung umgeben, die im vorliegenden Beispiel aus zwei Schalen-Körpern 24.1 und 24.2 gebildet ist. Die beiden Schalen-Körper 24.1 und 24.2 sind lösbar mit einer Zwischenwand 22 verbunden, die die erste Kammer 3 von einer zweiten Kammer 17 des Gehäuses 2 trennt. Die Schalen-Körper 24.1 und 24.2 können vorteilhafterweise ebenso wie die Zwischenwand 22 aus einem Kunststoff mit niedriger Wärmeleitfähigkeit gebildet sein. Dies verringert den Einfluss einer Temperaturänderung in der Umgebung auf die Temperatur der Messzelle 4.

Außerhalb der Abdeckung, im vorliegenden Beispiel unterhalb des zweiten Schalenkörpers 24.2 und des Gefäßes 6, ist ein Antrieb 28 eines Magnetrührers angeordnet, der ein magnetisches Feld erzeugt, das dazu dient, einen innerhalb des Gefäßes 6 vorliegenden Stabmagneten in Rotation zu versetzen, um den darin enthaltenen Elektrolyten 7 zu durchmischen.

In der von der ersten Kammer 3 über die Zwischenwand 22 getrennten zweiten Kammer 17 befindet sich im vorliegenden Ausführungsbeispiel ein Isoliergehäuse 27 aus einem wärmeisolierenden Material, z.B. Kunststoff, in dem ein Strömungskanal 21 ausgebildet ist. Der Strömungskanal 21 weist ein erstes Ende auf, das über eine erste Öffnung 12 in der Zwischenwand 22 mit der ersten Kammer 3 kommuniziert. Gleichermaßen weist der Strömungskanal 21 ein zweites Ende auf, das über eine zweite Öffnung 13 in der Zwischenwand 22 mit der ersten Kammer 3 kommuniziert. Innerhalb des Isoliergehäuses 27 ist ein erster Lüfter 23 im Strömungskanal angeordnet. Der erste Lüfter 23 kann zum Beispiel einen Ventilator aufweisen, der im Betrieb der Vorrichtung Gas durch den Strömungskanal 21 transportiert.

Innerhalb des Strömungskanals 21 ist außerdem ein erster Wärmetauscher 11 angeordnet. Der erste Wärmetauscher 11 weist einen Körper aus einem Material hoher Wärmeleitfähigkeit, z.B. einem Metall wie Kupfer oder Aluminium, auf. Der Körper besitzt eine Struktur, in der, z.B. durch eine Vielzahl von Rippen, eine Vielzahl von Strömungskanälen gebildet ist, die von einem den Wärmetauscher 11 passierenden Gasstrom durchströmbar sind, derart, dass eine möglichst große Oberfläche des wärmeleitenden Körpers in Kontakt mit dem hindurchströmenden Gas kommt, um Wärme aus dem Gas abzuleiten (Kühlfunktion) oder das Gas durch Übertragung von Wärme zu erwärmen (Heizfunktion).

Im vorliegenden Ausführungsbeispiel ist der erste Wärmetauscher 11 dazu bestimmt, einen durch den Strömungskanal 21 strömenden Gasstrom 10 zu kühlen. Zur Abführung von Wärme aus dem Körper des Wärmetauschers 11 sind ein oder mehrere Peltier-Elemente 14 am Umfang des Wärmetauschers 11 angeordnet, deren erste Seite (Kaltseite) in wärmeleitendem Kontakt mit dem Körper aus dem Material mit hoher Wärmeleitfähigkeit stehen. Zur Abführung von Wärme steht die der Kaltseite gegenüberliegende Warmseite des oder der Peltier-Elemente 14 in wärmeleitendem Kontakt mit einem zweiten Wärmetauscher 15, der identisch ausgestaltet sein kann wie der erste Wärmetauscher 11. In der zweiten Kammer 17 ist auf einer ersten Seite des zweiten Wärmetauschers 15 ein zweiter Lüfter 16 vorgesehen, der dazu ausgestaltet ist, einen durch den zweiten Wärmetauscher 15 verlaufenden Gasstrom zu erzeugen, der als Fluidkühlung der aktiven Abführung von Wärme von der Warmseite des Peltier-Elements über den zweiten Wärmetauscher 15 dient. Im Betrieb der Vorrichtung transportiert der zweite Lüfter 16 Frischluft von außerhalb des Gehäuses 2 in den Wärmetauscher 15. Stromabwärts des zweiten Wärmetauschers 15 sind weitere Lüfter (nicht eingezeichnet) angeordnet, die den aus dem zweiten Wärmetauscher 15 austretenden, erwärmten Abluftstrom aus dem Gehäuse 2 transportieren.

Mittels der beschriebenen Vorrichtung lässt sich ein temperierter Gasstrom 10 durch die erste Kammer 3 erzeugen, der der Einstellung oder Regelung einer stabilen Temperatur der Messzelle 4 bzw. des in dem Gefäß 6 enthaltenen Elektrolyten 5 dient. Im Betrieb der Vorrichtung erzeugt der in dem Strömungskanal 21 angeordnete erste Lüfter 23 einen Gasstrom 10 (durch Pfeile in Fig. 1 angeordnet), der in einem Kreislauf geführt wird, der durch den Strömungskanal 21 und die erste Kammer 3 innerhalb des von der Abdeckung 24.1 und 24.2 umgebenen Raums verläuft. Beim Durchströmen des ersten Wärmetauschers 11 wird der Gasstrom 10 mittels des oder der Peltier-Elemente 14 gekühlt und somit auf eine gewünschte Temperatur temperiert. In einer alternativen Ausgestaltung kann der erste Wärmetauscher auch der Erwärmung des Gasstroms zur Einstellung einer gewünschten Temperatur dienen. In einer weiteren alternativen Ausgestaltung kann der Gasstrom 10 auch in umgekehrter Richtung als der in Fig. 1 durch die Pfeile angedeuteten Richtung verlaufen.

Im Strömungsweg des Gasstroms 10 ist im vorliegenden Beispiel ein erster Temperatursensor 19 angeordnet, der mit der Steuerelektronik 18 verbunden ist, um an diese Temperaturmesswerte des Gasstroms 10 auszugeben. Ein zweiter Temperatursensor 20 ist im Bereich des ersten Endes des zweiten Wärmetauschers 15 angeordnet. Dieser zweite Temperatursensor 20 liegt innerhalb des Strömungswegs eines durch den zweiten Lüfter 16 erzeugten Gasstroms, der den zweiten Wärmetauscher 15 durchströmt. Auch der zweite Temperatursensor 20 ist mit der Steuerelektronik 18 verbunden, um an diese Temperaturmesswerte auszugeben.

Der Gasstrom 10 der mittels des ersten Wärmetauschers 11 gekühlten Luft wird durch das Isoliergehäuse 27 und die abnehmbare Abdeckung 24.1, 24.2 so geführt, dass er die Messzelle 4 und alle Elektroden und gasführenden Teile der Messzelle umspült. Mittels des ersten Temperatursensors 19 erfasst die Steuerelektronik 18 die Temperatur des Gasstroms 10 und wertet die erfassten Messwerte zur Steuerung oder Regelung der Temperatur des Gasstroms 10 aus. Beispielsweise kann die Steuerelektronik 18 die Temperatur des Gasstroms 10 mit einem in einem Speicher der Steuerelektronik 18 hinterlegten Sollwert vergleichen. Zur Anpassung der aktuell gemessenen IstWerte der Temperatur an den hinterlegten Sollwert, kann die Steuerelektronik 18 dazu eingerichtet sein, Stellwerte für die Leistung des oder der Peltierelemente 15 und/oder des oder der Lüfter 23, 16 auszugeben. Auf diese Weise kann die Temperatur des Gasstroms 10 konstant geregelt werden. Da der Gasstrom alle zu temperierenden Teile des Messsystems 1 umströmt, nehmen diese nach einer Zeit der Konditionierung dessen Temperatur an und bleiben temperaturstabil. Daraus resultierend wird ein stabiles Messsystem ohne Temperaturdrift erreicht.

In einer vorteilhaften Ausgestaltung können die Messzelle 4, insbesondere das Gefäß 6 und die für die Indikation verwendete Referenzelektrode bzw. für den Fall, dass wie im vorliegenden Beispiel Sensor- und Referenzelektrode in einer Kombielektrode 8 zusammengefasst sind, der Körper der Kombielektrode 8, im Wesentlichen aus Glas gebildet sein, was vorteilhaft für die Übertragung der Temperatur zum Elektrolyten 5 in dem Gefäß 6 und zum Innenelektrolyten der Referenzelektrode ist.

Durch die Anordnung des Antriebs 28 des Magnetrührers außerhalb der Abdeckung 24.2 ist dieser thermisch von der Messzelle 4 entkoppelt, so dass die Verlustleistung des Antriebs 28 keinen oder allenfalls vernachlässigbaren Einfluss auf die Temperatur des Gasstroms 10 hat.

Für Wartungszwecke sind die Schalen-Körper 24.1, 24.2 der Abdeckung abnehmbar ausgeführt. Im vorliegenden Beispiel sind die Schalen-Körper 24.1, 24.2 darüber hinaus so gestaltet, dass alle im Messbetrieb notwendig erreichbaren Teile frei zugänglich sind. So ist zwischen den Schalen-Körpern 24.1, 24.2 eine Öffnung 25 vorgesehen, über die Proben von außerhalb der Abdeckung in die Messzelle 4 zugeführt werden können, ohne dass die Schalen-Körper 24.1, 24.2 entnommen werden müssen. Durch Formschluss der Abdeckung zum Deckel 7 der Messzelle 4 und zur Zwischenwand 22 wird ein gewisser Grad der Abdichtung des Kreislaufs, innerhalb dessen sich der Gasstrom 10 ausbildet, zur Umgebung erreicht, welcher zusammen mit den verwendeten Materialien mit hohem Wärmewiderstand die Steuerung oder Regelung einer konstanten Temperatur des Gasstroms 10 erleichtert.

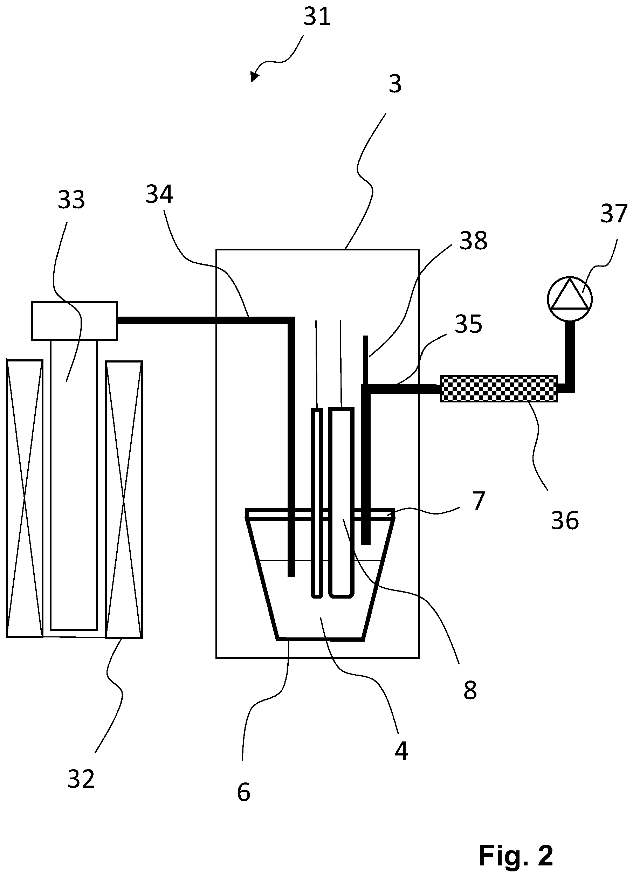

In Fig. 2 ist schematisch ein Elementaranalysesystem 31 mit dem anhand von Fig. 1 beschriebenen Messsystem 1 dargestellt. Teile des Messsystems 1, insbesondere die Gehäusekammern, die Steuerelektronik 18 und die Mittel zur Erzeugung und Temperierung des die Messzelle 4 umströmenden Gasstroms sind in Fig. 2 der Übersichtlichkeit halber weggelassen. Es ist lediglich die Gehäusekammer 3 und die darin angeordnete Messzelle 4 angedeutet.

Das Elementaranalysesystem 31 weist einen Verbrennungsofen 32 auf. In dem Verbrennungsofen 32 ist ein Verbrennungsrohr 33 angeordnet, das über eine Gaszuleitung 34 mit der Messzelle 4 des Messsystems 1 verbunden ist. Die Gaszuleitung 34 mündet durch den Deckel 7 der Messzelle 4 in das Gefäß 6. Durch den Deckel 7 verläuft auch eine Gasableitung 35, die das Innere des Gefäßes 6 mit einer Adsorber-Einheit 36 verbindet. Die Adsorber-Einheit 36 weist eine mit Aktivkohle befüllte Kammer auf. Die Adsorber-Einheit 36 ist mit einer Saugpumpe 37 verbunden, die dazu ausgestaltet ist, Gas aus dem Inneren des Gefäßes 6 über die Gasableitung 35 abzusaugen und durch die Adsorber-Einheit 36 zu transportieren.

Im vorliegenden Ausführungsbeispiel dient das Elementaranalysesystem 31 zur Bestimmung von Chlor in einer Probe. In dem Verbrennungsofen 32 wird im Messbetrieb die in einem Verbrennungsrohr 33 enthaltene Probe unter Zuleitung von Sauerstoff und Argon, in veränderlichen Anteilen, als Trägergas zu gasförmigen Reaktionsprodukten oxidiert, wobei in der Probe enthaltenes Chlor in Chlorwasserstoff überführt wird. Der gebildete Chlorwasserstoff gelangt mit dem Trägergasstrom über die Gaszuleitung 34 in die Messzelle 4. Im Strömungsweg des Trägergases können hier nicht weiter dargestellte weitere Vorrichtungen zur Abtrennung des Chlorwasserstoffs von anderen Reaktionsprodukten der Probe, z.B. zur Trägergastrocknung, vorgesehen sein. Der in den Elektrolyten 7 eingeleitete Chlorwasserstoff wird im Elektrolyten 7 gelöst und quantitativ mittels coulometrischer Titration bestimmt. Hierzu steuert die Steuereinheit 18 das Messystem zur Ermittlung der durch die Generatorelektroden bis zur Detektion des Endpunkts der coulometrischen Titration mittels der potentiometrischen Kombielektrode 8 geflossenen Ladung. Aus dieser Messgröße leitet die Steuereinheit 18 einen Messwert des Chlorgehalts in der ursprünglichen Probe ab. Der Trägergasstrom wird über die Gasableitung 35 wieder aus der Messzelle 4 ausgetragen. Zum Trägergas-Transport dient dabei die Saugpumpe 37. Der Anteil der bei der coulometrischen Titration verwendeten Essigsäure, der mit dem Trägergasstrom aus der Messzelle 4 ausgetragen wird, wird in der Adsorber-Einheit 36 adsorbiert, so dass das Trägergas stromabwärts der Adsorber-Einheit 36 in die Umgebung entlassen werden kann.

Der Trägergasstrom stellt durch resultierende Erwärmung des Elektrolyten 7 grundsätzlich eine weitere Störgröße dar, die jedoch durch die Temperierung der Messzelle mit dem Gasstrom 10 kompensiert wird. Im vorliegenden Ausführungsbeispiel ist eine weitere Öffnung 38 in der Gasableitung 35 vorgesehen, z.B. in Form eines T-Stücks. Um stabile Verhältnisse zu erreichen, ist die Saugpumpe 37 steuerbar, vorteilhafterweise mittels der Steuerelektronik 18. Im Betrieb wird die Saugpumpe 37 so gesteuert oder geregelt, dass der Saugfluss, d.h. der Gasfluss durch die Gasableitung 35 etwas größer ist als der Fluss des durch die Gaszuleitung 34 einströmenden Trägergasstroms. Dabei soll der Unterschied zwischen dem Gasfluss durch die Gasableitung 35 und dem Fluss durch die Gasleitung 34 möglichst gering gewählt werden, so dass nur ein geringer Teil des den temperierten Gasstrom 10 bildenden Gases abgesaugt wird. Durch die Absaugung aus dem temperierten Gasstrom 10 entferntes Gas wird durch aus der Umgebung zuströmendes Gas ersetzt, da der beschriebene Kreislauf des temperierten Gasstroms 10 nicht hermetisch gegenüber der Umgebung abgeschlossen ist.

Die hier beschriebene Erfindung ist nicht auf die dargestellten Ausführungsbeispiele beschränkt. Die Gaskühlung der Messzelle kann beispielsweise mit ähnlichen Vorteilen nicht nur in einem Elementaranalysegerät für die Bestimmung von Chlor oder Schwefel, sondern auch für weitere Halogene, oder die Summenparameter AOX (Englischer Fachbegriff: Adsorbable Organic Halides bzw. Adsorbierbare organisch gebundene Halogene) oder AOF (Englischer Fachbegriff: Adsorbable Organic Fluorine bzw. Adsorbierbar organisch gebundenes Fluor) eingesetzt werden.

Die hier beschriebene Temperierung einer Messzelle mit Elektroden in einem Messsystem kann darüber hinaus auch in vielen weiteren Anwendungen eingesetzt werden und ist auch nicht auf den Einsatz für coulometrische Messzellen und/oder als Teil eines Elementaranalysesystems beschränkt. Auch bei der Bestimmung anderer Parameter, z.B. Arsen, bei der Karl-Fischer-Titration oder in coulometrischen Verfahren mit Quecksilber-Tropfenelektroden kann die beschriebene Temperierung mittels eines Gasstroms eingesetzt werden. Sie kann auch für die Temperierung von Messzellen zur unmittelbaren Bestimmung von Analyseparametern mittels amperometrischer oder potentiometrischer Messungen verwendet werden.

## Patentansprüche

1. Messsystem (1), umfassend:
- ein Gehäuse (2);
- eine in dem Gehäuse (1) gebildete erste Kammer (3);
- eine in der ersten Kammer (3) angeordnete Messzelle (4), die ein zur Aufnahme eines Elektrolyten (5) ausgebildetes Gefäß (6) und mindestens eine Elektrode (8) für potentiometrische und/oder amperometrische Messungen aufweist, wobei die mindestens eine Elektrode (8) einen ersten Abschnitt, der innerhalb des Gefäßes (6) angeordnet ist, und einen zweiten Abschnitt, der sich aus dem Gefäß (6) heraus in die erste Kammer (3) erstreckt, aufweist; und
- eine Temperiervorrichtung (9), **dadurch gekennzeichnet, dass**
die Temperiervorrichtung (9) dazu ausgestaltet ist, einen durch die erste Kammer (3) verlaufenden, die Messzelle (4), insbesondere das Gefäß (6) und den sich durch einen Gefäßdeckel (7) in die erste Kammer (3) erstreckenden Abschnitt der mindestens einen Elektrode (8), umspülenden, temperierten Gasstrom (10) zu erzeugen, wobei die Temperiervorrichtung (9) zur Temperierung des Gasstroms (10) einen außerhalb der ersten Kammer (3) angeordneten ersten Wärmetauscher (11) aufweist, der dazu ausgestaltet ist, von dem Gasstrom (10) durchströmt zu werden, derart, dass der Gasstrom in einem durch die erste Kammer (3) und den ersten Wärmetauscher (11) verlaufenden Kreislauf geführt wird.

2. Messystem (1) nach Anspruch 1,
wobei die mindestens eine Elektrode (8) eine Elektrode, insbesondere eine Referenzelektrode, eines potentiometrischen Sensors, oder eine Elektrode eines Elektrodensystems für amperometrische Messungen ist.

3. Messsystem (1) nach Anspruch 1 oder 2,
wobei die Messzelle eine Zuleitung für ein Titriermittel aufweist, die in das Gefäß mündet, oder
wobei das Messsystem (1) zur coulometrischen Titration eines Analyten in dem Elektrolyten ausgestaltet ist und eine mindestens abschnittsweise in dem Gefäß angeordnete Generatoranode und eine mindestens abschnittsweise in dem Gefäß angeordnete Generatorkathode zur Erzeugung des Titriermittels umfasst.

4. Messsystem (1) nach Anspruch 1,
wobei die Temperiervorrichtung (9) einen Strömungskanal (21) mit einem ersten Ende und einem zweiten Ende aufweist, wobei sich das erste Ende durch eine die erste Kammer (3) begrenzende Wand (22) in einen ersten Bereich der ersten Kammer (3) öffnet, und wobei sich das zweite Ende durch die die erste Kammer (3) begrenzende Wand (22) in einen zweiten Bereich der ersten Kammer (3) öffnet, und
wobei die Temperiervorrichtung (9) weiter mindestens einen in dem Strömungskanal (21) angeordneten Lüfter (23) aufweist, der dazu eingerichtet ist, Gas durch den Strömungskanal (21) zu transportieren, wobei der erste Wärmetauscher (11) so in dem Strömungskanal (21) angeordnet ist, dass durch den Strömungskanal (21) mittels des Lüfters (23) transportiertes Gas den ersten Wärmetauscher (11) durchströmt.

5. Messsystem (1) nach Anspruch 1,
wobei die Temperiervorrichtung (9) eine, insbesondere mindestens ein Peltier-Element umfassende, Kühlvorrichtung (14) zur Abführung von Wärme vom ersten Wärmetauscher (11) und/oder eine, insbesondere mindestens ein Peltier-Element umfassende, Heizvorrichtung zur Zuführung von Wärme zum ersten Wärmetauscher (11) aufweist.

6. Messystem (1) nach Anspruch 5,
wobei die Temperiervorrichtung (9) einen zweiten Wärmetauscher (15) aufweist, der in thermischem Kontakt mit der Kühlvorrichtung (14) und/oder der Heizvorrichtung, insbesondere mit einem Peltier-Element der Kühlvorrichtung (14) und/oder der Heizvorrichtung, steht.

7. Messsystem (1) nach Anspruch 6,
wobei die Temperiervorrichtung (9) Mittel (16) zur Erzeugung eines Fluidstroms aufweist, der in thermischem Kontakt mit mindestens einer Kontaktfläche des zweiten Wärmetauschers (15) steht und wobei der zweite Wärmetauscher (15) innerhalb des Gehäuses (2) in einer von der ersten Kammer (3) getrennten zweiten Kammer (17) angeordnet ist, und wobei die Mittel (16) zur Erzeugung eines Fluidstroms dazu ausgestaltet sind, Luft aus der Umgebung von außerhalb des Gehäuses (2) in die zweite Kammer (17) zum zweiten Wärmetauscher (15) zu transportieren und wieder aus der zweiten Kammer (17) auszuleiten.

8. Messsystem (1) nach einem der Ansprüche 1 bis 7,
weiter aufweisend:
eine Steuerelektronik (18), die dazu eingerichtet ist, die Temperiervorrichtung zu steuern um den Gasstrom (10) zu temperieren, und
weiter aufweisend mindestens einen in dem temperierten Gasstrom (10) angeordneten ersten Temperatursensor (19), der mit der Steuerelektronik (18) verbunden ist, um Messsignale an die Steuerelektronik (19) auszugeben, und wobei die Steuerelektronik (18) dazu eingerichtet ist, anhand der Messsignale des mindestens einen ersten Temperatursensors (19) eine Temperatur des Gasstroms (10) einzustellen und/oder zu regeln.

9. Messsystem (1) nach Anspruch 7,
weiter aufweisend:
eine Steuerelektronik (18), die dazu eingerichtet ist, die Temperiervorrichtung (9) zu steuern um den Gasstrom (10) zu temperieren,
mindestens einen in dem temperierten Gasstrom (10) angeordneten ersten Temperatursensor (19), der mit der Steuerelektronik (18) verbunden ist, um Messsignale an die Steuerelektronik (18) auszugeben, und
mindestens einen in dem Fluidstrom angeordneten zweiten Temperatursensor (20), der mit der Steuerelektronik (18) verbunden ist, um Messsignale an die Steuerelektronik (18) auszugeben,
und wobei die Steuerelektronik (18) dazu eingerichtet ist, anhand der Messsignale des mindestens einen ersten (19) und des mindestens einen zweiten Temperatursensors (20) eine Temperatur des Gasstroms (10) einzustellen und/oder zu regeln.

10. Messsystem (1) nach einem der Ansprüche 1 bis 9,
weiter umfassend eine, aus einem oder mehreren Teilen bestehende, Abdeckung (24.1, 24.2), die derart lösbar an einer Wand (22) der ersten Kammer (3) befestigt ist, dass sie die Messzelle (4), insbesondere das Gefäß (6) und den sich aus dem Gefäß (6) heraus in die erste Kammer (3) erstreckenden zweiten Abschnitt der mindestens einen Elektrode (8), umgibt.

11. Messystem (1) nach einem der Ansprüche 1 bis 10,
wobei die Abdeckung (24.1, 24.2) eine, vorzugsweise oberhalb der Messzelle (4) angeordnete, Öffnung (25) aufweist, durch die bei montierter Abdeckung (24.1, 24.2) ein Flüssigkeitsstandard in das Gefäß (6) der Messzelle (4) dosiert werden kann.

12. Messsystem (1) nach einem der Ansprüche 1 bis 11,
wobei die Messzelle (4) einen in das Gefäß (6) der Messzelle (4) mündenden Gaseingang und einen, insbesondere im Gefäß der Messzelle (4) angeordneten, Gasausgang aufweist, wobei der Gasausgang mit einer aus der ersten Kammer (3) herausgeführten, insbesondere mit einer Absaugeinrichtung verbundenen, Gasableitung verbunden ist.

13. Messsystem (1) nach Anspruch 12,
wobei der Gasausgang, insbesondere über ein den Gasausgang mit der Gasableitung verbindenden T-Stück, zur ersten Kammer (3) offen ist, und
wobei eine Steuereinrichtung (18) des Messystems (1) dazu eingerichtet ist, einen Fluss von Messgas durch den Gaseingang in die Messzelle (4) einzustellen, und einen Fluss von Gas durch die Gasableitung (35) einzustellen, derart, dass der Fluss von Gas durch die Gasableitung (35) größer ist als der Fluss von Messgas durch den Gaseingang.

14. Elementaranalysesystem zur quantitativen Bestimmung eines Analyten aus einer, beispielsweise festen, flüssigen oder gasförmigen Probe, umfassend
einen Verbrennungsofen (32),
ein in dem Verbrennungsofen angeordnetes Verbrennungsrohr (33) zur Aufnahme und Verbrennung der Probe,
mindestens eine sich in das Verbrennungsrohr (33) öffnende Gasleitung (34); und
ein Messsystem (1) nach einem der Ansprüche 1 bis 13,
wobei die Gasleitung (34) mit einem Gaseingang der Messzelle (4) des Messystems (1) fluidisch verbunden ist, um aus dem Verbrennungsrohr ausgeleitetes Messgas, beispielsweise ein ein bei der Verbrennung der Probe gebildetes Reaktionsprodukt des Analyten enthaltendes Trägergas, dem Messsystem (1) zuzuführen.

## Claims

1. A measuring system (1), comprising:
- A housing (2);
- a first chamber (3) formed in the housing (1);
- a measuring cell (4) arranged in the first chamber (3), which has a vessel (6) configured to hold an electrolyte (5) and at least one electrode (8) for potentiometric and/or amperometric measurements, wherein the at least one electrode (8) has a first section, which is arranged inside the vessel (6), and a second section extending from the vessel (6) into the first chamber (3); and
- a temperature-control device (9), **characterized in that** the temperature-control device (9) is configured to produce a temperature-controlled gas flow (10) running through the first chamber (3), and flowing around the measuring cell (4), in particular the vessel (6) and the section of the at least one electrode (8) extending through a vessel lid (7) into the first chamber (3), wherein the temperature-control device (9) for controlling the temperature of the gas flow (10) has a first heat exchanger (11) arranged outside the first chamber (3), which is configured to have the gas flow (10) flow through it in such a way that the gas flow is conducted in a circuit running through the first chamber (3) and the first heat exchanger (11).

2. The measuring system (1) as claimed in claim 1,
wherein the at least one electrode (8) is an electrode, in particular a reference electrode, of a potentiometric sensor, or an electrode of an electrode system for amperometric measurements.

3. The measuring system (1) as claimed in claim 1 or 2,
wherein the measuring cell has a supply line for a titration agent, which opens out into the vessel, or
wherein the measuring system (1) is configured for the coulometric titration of an analyte in the electrolyte and comprises a generator anode arranged at least in sections in the vessel and a generator cathode arranged at least in sections in the vessel for producing the titration agent.

4. The measuring system (1) as claimed in claim 1,
wherein the temperature-control device (9) has a flow channel (21) with a first end and a second end, wherein the first end opens out into a first area of the first chamber (3) through a wall (22) delimiting the first chamber (3), and wherein the second end opens out into a second area of the first chamber (3) through the wall (22) delimiting the first chamber (3),
and
wherein the temperature-control device (9) also has at least one fan (23) arranged in the flow channel (21), which is configured to transport gas through the flow channel (21),
wherein the first heat exchanger (11) is arranged in the flow channel (21) in such a way that gas transported through the flow channel (21) using the fan (23) flows through the first heat exchanger (11).

5. The measuring system (1) as claimed in claim 1,
wherein the temperature-control device (9) has a cooling device (14), in particular comprising at least one Peltier element, for dissipating heat from the first heat exchanger (11) and/or a heating device, in particular comprising at least one Peltier element, for supplying heat to the first heat exchanger (11).

6. The measuring system (1) as claimed in claim 5,
wherein the temperature-control device (9) has a second heat exchanger (15), which is in thermal contact with the cooling device (14) and/or the heating device, in particular with a Peltier element of the cooling device (14) and/or the heating device.

7. The measuring system (1) as claimed in claim 6,
wherein the temperature-control device (9) has means (16) for producing a fluid flow, which is in thermal contact with at least one contact surface of the second heat exchanger (15), and wherein the second heat exchanger (15) is arranged inside the housing (2) in a second chamber (17) that is separate from the first chamber (3), and wherein the means (16) for producing a fluid flow are configured to transport air from the environment outside the housing (2) into the second chamber (17) to the second heat exchanger (15) and to discharge it out of the second chamber (17) again.

8. The measuring system (1) as claimed in one of claims 1 to 7,
further comprising:
Control electronics (18) configured to control the temperature-control device in order to control the temperature of the gas flow (10), and
further having at least one first temperature sensor (19) arranged in the temperature-controlled gas flow (10), which is connected to the control electronics (18) in order to output measurement signals to the control electronics (19), and wherein the control electronics (18) are configured to set and/or to regulate a temperature of the gas flow (10) based on the measurement signals of the at least one first temperature sensor (19).

9. The measuring system (1) as claimed in claim 7,
further comprising:
Control electronics (18), which are configured to control the temperature-control device (9) in order to control the temperature of the gas flow (10),
at least one first temperature sensor (19) arranged in the temperature-controlled gas flow (10), which is connected to the control electronics (18) in order to output measurement signals to the control electronics (18),
and
at least one second temperature sensor (20) arranged in the fluid flow, which is connected to the control electronics (18) in order to output measurement signals to the control electronics (18),
and wherein the control electronics (18) are configured to set and/or to regulate a temperature of the gas flow (10) based on the measurement signals of the at least one first (19) and the at least one second temperature sensor (20).

10. The measuring system (1) as claimed in one of claims 1 to 9,
further comprising a cover (24.1, 24.2) consisting of one or more parts, which can be attached to a wall (22) of the first chamber (3) so that it can be removed again in such a way that it surrounds the measuring cell (4), in particular the vessel (6) and the second section of the at least one electrode (8) extending from the vessel (6) into the first chamber (3).

11. The measuring system (1) as claimed in one of claims 1 to 10,
wherein the cover (24.1, 24.2) has an opening (25), preferably arranged above the measuring cell (4), through which a liquid standard can be dosed into the vessel (6) of the measuring cell (4) when the cover (24.1, 24.2) is fitted.

12. The measuring system (1) as claimed in one of claims 1 to 11,
wherein the measuring cell (4) has a gas input opening out into the vessel (6) of the measuring cell (4) and a gas output, in particular arranged in the vessel of the measuring cell (4), wherein the gas output is connected to a gas discharge line led out of the first chamber (3), in particular connected to an extraction device.

13. The measuring system (1) as claimed in claim 12,
wherein the gas output is open to the first chamber (3), in particular via a T-piece connecting the gas output to the gas discharge line, and
wherein a control device (18) of the measuring system (1) is configured to set a flow of measuring gas through the gas input into the measuring cell (4), and a flow of gas through the gas discharge line (35) in such a way that the flow of gas through the gas discharge line (35) is greater than the flow of measuring gas through the gas input.

14. An elementary analysis system for determining the quantity of an analyte from a, for example solid, liquid or gaseous, sample, comprising
a combustion furnace (32),
a combustion tube (33) arranged in the combustion furnace for housing and burning the sample,
at least one gas line (34) opening out into the combustion tube (33); and
a measuring system (1) as claimed in one of claims 1 to 13,
wherein the gas line (34) is fluidically connected to a gas input of the measuring cell (4) of the measuring system (1) in order to conduct to the measuring system (1) measuring gas discharged from the combustion tube, for example a carrier gas containing a reaction product of the analyte formed when burning the sample.

## Revendications

1. Système de mesure (1), comprenant :
- un boîtier (2) ;
- une première chambre (3) formée dans le boîtier (1) ;
- une cellule de mesure (4) disposée dans la première chambre (3), laquelle cellule comporte un récipient (6) conçu pour recevoir un électrolyte (5) et au moins une électrode (8) pour des mesures potentiométriques et/ou ampérométriques, l'au moins une électrode (8) comportant une première partie disposée à l'intérieur du récipient (6) et une deuxième partie qui s'étend hors du récipient (6) dans la première chambre (3) ; et
- un dispositif de thermorégulation (9), **caractérisé en ce que** le dispositif de thermorégulation (9) est conçu pour faire circuler un flux de gaz thermorégulé à travers la première chambre (3), autour de la cellule de mesure (4), notamment le récipient (6) et la partie de l'au moins une électrode (8) s'étendant dans la première chambre (3) à travers un couvercle de récipient (7), le dispositif de thermorégulation (9) comportant, pour réguler la température du flux de gaz (10), un premier échangeur de chaleur (11) disposé à l'extérieur de la première chambre (3) et conçu pour être traversé par le flux de gaz (10) de telle sorte que le flux de gaz circule dans un circuit traversant la première chambre (3) et le premier échangeur de chaleur (11).

2. Système de mesure (1) selon la revendication 1,
pour lequel l'au moins une électrode (8) est une électrode, notamment une électrode de référence, d'un capteur potentiométrique, ou une électrode d'un système d'électrodes pour des mesures ampérométriques.

3. Système de mesure (1) selon la revendication 1 ou 2,
pour lequel la cellule de mesure comporte une conduite d'alimentation pour un agent de titrage, laquelle conduite débouche dans le récipient, ou
lequel système de mesure (1) est conçu pour le titrage coulométrique d'un analyte dans l'électrolyte et comprend une anode de générateur disposée au moins par sections dans le récipient et une cathode de générateur disposée au moins par sections dans le récipient pour produire l'agent de titrage.

4. Système de mesure (1) selon la revendication 1,
pour lequel le dispositif de thermorégulation (9) comporte un canal d'écoulement (21) avec une première extrémité et une deuxième extrémité, la première extrémité s'ouvrant à travers une paroi (22) délimitant la première chambre (3) dans une première zone de la première chambre (3), et la deuxième extrémité s'ouvrant à travers la paroi (22) délimitant la première chambre (3) dans une deuxième zone de la première chambre (3), et
pour lequel le dispositif de thermorégulation (9) comporte en outre au moins un ventilateur (23) disposé dans le canal d'écoulement (21), lequel ventilateur est conçu pour transporter du gaz à travers le canal d'écoulement (21),
le premier échangeur de chaleur (11) étant disposé dans le canal d'écoulement (21) de telle sorte que le gaz transporté à travers le canal d'écoulement (21) au moyen du ventilateur (23) s'écoule à travers le premier échangeur de chaleur (11).

5. Système de mesure (1) selon la revendication 1,
pour lequel le dispositif de thermorégulation (9) comporte un dispositif de refroidissement (14) comprenant notamment au moins un élément Peltier pour évacuer la chaleur du premier échangeur de chaleur (11) et/ou un dispositif de chauffage comprenant notamment au moins un élément Peltier pour apporter de la chaleur au premier échangeur de chaleur (11).

6. Système de mesure (1) selon la revendication 5,
pour lequel le dispositif de thermorégulation (9) comprend un deuxième échangeur de chaleur (15), lequel est en contact thermique avec le dispositif de refroidissement (14) et/ou le dispositif de chauffage, notamment avec un élément Peltier du dispositif de refroidissement (14) et/ou du dispositif de chauffage.

7. Système de mesure (1) selon la revendication 6,
pour lequel le dispositif de thermorégulation (9) comprend des moyens (16) destinés à générer un flux de fluide, lequel est en contact thermique avec au moins une surface de contact du deuxième échangeur de chaleur (15), le deuxième échangeur de chaleur (15) étant disposé à l'intérieur du boîtier (2) dans une deuxième chambre (17) séparée de la première chambre (3), et les moyens (16) destinés à générer un flux de fluide étant conçus pour transporter de l'air provenant de l'environnement à l'extérieur du boîtier (2) dans la deuxième chambre (17) vers le deuxième échangeur de chaleur (15) et pour l'évacuer à nouveau de la deuxième chambre (17).

8. Système de mesure (1) selon l'une des revendications 1 à 7,
comprenant en outre :
une électronique de commande (18), laquelle est conçue pour commander le dispositif de thermorégulation afin de réguler la température du flux de gaz (10), et
au moins un premier capteur de température (19) disposé dans le flux de gaz thermorégulé (10), lequel capteur est relié à l'électronique de commande (18) afin d'émettre des signaux de mesure vers l'électronique de commande (19), et
l'électronique de commande (18) étant conçue pour régler et/ou réguler une température du flux de gaz (10) à l'aide des signaux de mesure de l'au moins un premier capteur de température (19).

9. Système de mesure (1) selon la revendication 7,
comprenant en outre :
une électronique de commande (18), laquelle est conçue pour commander le dispositif de thermorégulation (9) afin de réguler la température du flux de gaz (10),
au moins un premier capteur de température (19) disposé dans le flux de gaz thermorégulé (10), lequel capteur est relié à l'électronique de commande (18) afin de transmettre des signaux de mesure à l'électronique de commande (18),
et
au moins un deuxième capteur de température (20) disposé dans le flux de fluide, lequel capteur est relié à l'électronique de commande (18) afin de transmettre des signaux de mesure à l'électronique de commande (18), et l'électronique de commande (18) étant conçue pour régler et/ou réguler une température du flux de gaz (10) à l'aide des signaux de mesure de l'au moins un premier capteur de température (19) et de l'au moins un deuxième capteur de température (20).

10. Système de mesure (1) selon l'une des revendications 1 à 9,
comprenant en outre un couvercle (24.1, 24.2) composé d'une ou plusieurs parties, lequel couvercle est fixé de manière amovible à une paroi (22) de la première chambre (3) de telle sorte que ledit couvercle entoure la cellule de mesure (4), notamment le récipient (6) et la deuxième partie de l'au moins une électrode (8) s'étendant hors du récipient (6) dans la première chambre (3).

11. Système de mesure (1) selon l'une des revendications 1 à 10,
pour lequel le couvercle (24.1, 24.2) présente une ouverture (25) disposée de préférence au-dessus de la cellule de mesure (4), ouverture à travers laquelle, lorsque le couvercle (24.1, 24.2) est monté, un étalon liquide peut être dosé dans le récipient (6) de la cellule de mesure (4).

12. Système de mesure (1) selon l'une des revendications 1 à 11,
pour lequel la cellule de mesure (4) comporte une entrée de gaz débouchant dans le récipient (6) de la cellule de mesure (4) et une sortie de gaz, notamment disposée dans le récipient de la cellule de mesure (4), la sortie de gaz étant reliée à l'évacuation de gaz sortant de la première chambre (3), laquelle évacuation de gaz est notamment reliée à un dispositif d'aspiration.

13. Système de mesure (1) selon la revendication 12,
pour lequel la sortie de gaz est ouverte vers la première chambre (3), notamment via un té reliant la sortie de gaz à l'évacuation de gaz, et
pour lequel un dispositif de commande (18) du système de mesure (1) est conçu pour régler un flux de gaz de mesure à travers l'entrée de gaz dans la cellule de mesure (4) et à régler un flux de gaz à travers l'évacuation de gaz (35) de telle sorte que le flux de gaz à travers l'évacuation de gaz (35) soit supérieur au flux de gaz de mesure à travers l'entrée de gaz.

14. Système d'analyse élémentaire destiné à la détermination quantitative d'un analyte à partir d'un échantillon, par exemple solide, liquide ou gazeux, lequel système comprend
un four de combustion (32),
un tube de combustion (33) disposé dans le four de combustion destiné à recevoir et à brûler l'échantillon,
au moins une conduite de gaz (34) s'ouvrant dans le tube de combustion (33) ; et
un système de mesure (1) selon l'une des revendications 1 à 13,
la conduite de gaz (34) étant reliée de manière fluidique à une entrée de gaz de la cellule de mesure (4) du système de mesure (1) afin d'acheminer vers le système de mesure (1) le gaz de mesure évacué du tube de combustion, par exemple un gaz vecteur contenant un produit de réaction de l'analyte formé lors de la combustion de l'échantillon.
